# FASCICULE DE BREVET EUROPEEN

(11) **EP 2 692 089 B1**
(45) Date de publication et mention de la délivrance du brevet: **05.10.2016**
(21) Numéro de dépôt: 12718287.1
(22) Date de dépôt: 30.03.2012
(51) Int. Cl.: H04L 12/22, H04L 29/06, H04L 29/08

(54) **MÉCANISME DE REDIRECTION ENTRANTE SUR UN PROXY INVERSE**
EINGEHENDER UMLEITUNGSMECHANISMUS AUF EINEM REVERSE-PROXY
INCOMING REDIRECTION MECHANISM ON A REVERSE PROXY

(30) Priorité: 31.03.2011 FR 1152748
(43) Date de publication de la demande: 05.02.2014
(73) Titulaire: Orange, 75015 Paris (FR)
(72) Inventeur: CARBOU, Romain, F-91800 Brunoy (FR); BARS, Rémi, 22700 Louannec (FR)
(74) Mandataire: Cabinet Plasseraud
(86) Numéro de dépôt international: PCT/FR2012/050697
(87) Numéro de publication internationale: WO 2012/131275

(56) Documents cités:
- EP-A2- 1 255 395
- US-A1- 2007 174 454
- US-A1- 2007 271 453
- TSCHOFENIG H ET AL: "A Firewall/NAT Traversal Client for CASP; draft-tschofenig-nsis-casp- midcom-01.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, no. 1, 3 mars 2003 (2003-03-03), XP015005531, ISSN: 0000-0004
- JONES M ET AL: "The OAuth 2.0 Protocol: Bearer Tokens; draft-ietf-oauth-v2-bearer-01.txt", THE OAUTH 2.0 PROTOCOL: BEARER TOKENS; DRAFT-IETF-OAUTH-V2-BEARER-01.TXT INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 2 décembre 2010 (2010-12-02), pages 1-11, XP015072814,

## Description

L'invention concerne le domaine des télécommunications, et plus précisément, un procédé et un dispositif de filtrage de paquets.

Un contrôle de flux du trafic IP basé sur l'identité est enseigné par le document US2007271453. Tout d'abord les informations d'identification d'un premier noeud sont reçues. Ces informations d'identification sont ensuite utilisées pour la vérification des tentatives d'identification de noeuds distants. Et un jeton est reçu d'au moins un noeud distant. L'Authentification d'au moins un noeud distant est exécutée sur la base du jeton et, si le noeud distant est authentifié, les règles d'un pare-feu sont installées permettant à toutes les communications vers un premier noeud d'accepter des paquets provenant d'une adresse du noeud distant à destination de l'adresse du premier noeud.

Un protocole client CASP qui permet des noeuds aux informations de signal aux pare-feu d'une façon tant dans-chemin que de-chemin est, quant à lui, décrit par le document « A firewall/NAT Traversal Client for CASP » de H Tschoffenig et al., IETF Internet Draft, 3 Mars 2003 (http://tools.ietf.org/html/draft-tschofenig-nsis-casp-midcom-01). Le protocole permet en outre d'établir une attache de NAT et fournir à l'initiateur de signalisation les informations de NAT. Ceci est des informations peut alors être utilisé dans d'autres protocoles comme le SIP.

Si, on se place dans le contexte dans lequel un premier équipement (par exemple un terminal client) d'un premier réseau (par exemple un réseau d'entreprise) émet une requête (requête d'accès à un contenu, commande, envoi de données ou tout autre type de requête) vers un deuxième équipement (par exemple un serveur de contenus) d'un deuxième réseau (par exemple un réseau domestique), les deux réseaux étant interconnectés entre eux via le réseau Internet.

Dans un tel contexte, le routeur Internet du réseau domestique, qui permet aux utilisateurs du réseau domestique d'accéder à Internet, joue pour cette requête d'accès à distance, le rôle d'un dispositif de filtrage et de routage, autorisant les connexions entrantes au cas le cas, avec pour but de les aiguiller vers l'équipement du réseau domestique ciblé dans cette requête.

On suppose que les requêtes émises à partir d'un équipement du premier réseau sont transmises par l'intermédiaire d'une entité relais de confiance, sous forme par exemple de serveur relais. Ce serveur relais constitue une entité « de confiance » du point de vue de la passerelle du deuxième réseau, contrairement à toute autre entité qui, depuis Internet chercherait à accéder directement à cette passerelle au moyen de son adresse publique, sans y avoir été explicitement autorisée.

Un dialogue est ainsi établi entre ce serveur relais et un agent Reverse Proxy de la passerelle du deuxième réseau, dialogue au cours duquel l'agent Reverse Proxy vérifie les autorisations décrivant les droits d'accès d'un utilisateur distant vis-à-vis des données / contenus visés dans la requête émise par le premier équipement. Cette étape est peu coûteuse en ressources et en quantité d'information transmise, car elle se résume, dans le cas d'exemple d'une requête d'accès à un contenu multimédia, à une succession d'opérations de parcours de dossiers dans un système de fichiers.

La transmission d'un contenu multimédia est cependant potentiellement très coûteuse, tant en ressources réseaux qu'en capacité de traitement. Il apparaît ainsi un besoin pour éviter de solliciter inutilement les ressources mémoire et CPU de la passerelle du deuxième réseau qui doit, autant que faire se peut, être cantonnée à sa fonction de routage, et pour éviter de créer un goulet d'étranglement au niveau du serveur relais SVR ou de doter ce serveur de moyens de gestion de charge.

Usuellement, un port de communication spécifique, distinct du port de communication par défaut servant à joindre l'agent Reverse Proxy, est ainsi alloué dynamiquement au niveau de l'interface réseau publique de la passerelle du deuxième réseau, port de communication dont l'usage est réservé au premier équipement. Le mécanisme de redirection consiste alors à fournir au client une adresse de redirection constituée de l'adresse publique de la passerelle et du port de communication qui a été spécifiquement alloué.

Puis, par un simple mécanisme de routage entrant classique ne faisant plus intervenir l'agent Reverse Proxy de la passerelle du deuxième réseau, la requête venant directement du client est routée par cette passerelle domestique vers l'équipement cible du deuxième réseau.

Or, un tel mécanisme peut être contrarié par la présence dans le premier et/ou deuxième réseau d'un ou plusieurs pare-feux susceptible(s) de filtrer le trafic vers ces ports de communication non standards. Par exemple, l'opérateur Internet du deuxième réseau pourrait fort bien adopter une politique restrictive remettant en cause la capacité à joindre depuis Internet un port de communication spécifique de la passerelle. Autre exemple, le premier réseau peut être équipé de pare-feux filtrant le trafic sortant de ce premier réseau.

Enfin, un tel mécanisme ne permet pas de distinguer plusieurs terminaux clients, auxquels est affectée une même adresse lorsque le pare-feu/proxy du premier réseau utilise une seule et même adresse publique pour les communications établies avec les terminaux clients connectés à ce réseau public.

Il apparaît ainsi un besoin d'une solution sécurisée et générique pour autoriser la traversée d'une passerelle dans un tel contexte.

Un des buts de l'invention est de remédier à des problèmes, inconvénients ou insuffisances de l'état de la technique et/ou d'y apporter des améliorations.

L'invention concerne, selon un premier aspect, un procédé de filtrage de paquets selon la revendication 1.

Il est ainsi possible de faire la distinction entre plusieurs terminaux source qui émettraient des requêtes et d'assurer que seule une requête provenant d'une entité source autorisée puisse être routée vers une entité destinataire par création d'une règle de filtrage adhoc, autorisant le routage de la requête à jeton d'authentification valide.

Selon un mode de réalisation, le procédé de filtrage comprend une étape de suppression de la règle de filtrage de deuxième niveau dudit ensemble après routage du dernier paquet relatif à ladite requête. La règle de filtrage de deuxième niveau est donc temporaire : créée pour un seul envoi de données et prenant fin après envoi et routage du dernier paquet relatif à la requête. Ceci permet de renforcer la sécurité de l'accès au réseau. En effet, une requête ultérieure ne sera routée vers sa destination que si elle comprend également un jeton d'authentification valide et qu'une autre règle de filtrage (temporaire elle aussi) est créée pour cette requête ultérieure.

Selon un mode de réalisation du procédé de filtrage, l'étape de vérification comprend au moins une des étapes suivantes :
- déterminer si une durée de validité du jeton d'authentification est expirée : on peut ainsi contrôler qu'un jeton est utilisé peu de temps après sa génération ;
- déterminer si le jeton d'authentification a déjà été utilisé dans au moins une autre requête reçue antérieurement à ladite requête: on peut ainsi imposer qu'un jeton soit utilisé une seule et unique fois ;
- déterminer si le jeton d'authentification correspond à l'adresse source de ladite requête : on peut ainsi imposer que le jeton d'authentification n'est utilisé que par une entité autorisée dont l'adresse source est authentifiée;
- déterminer si le jeton d'authentification correspond à un contenu pour lequel ladite requête est émise : on peut ainsi imposer que le jeton d'authentification n'est utilisé que pour un usage prévu et autorisé, c'est-à-dire l'accès à un contenu donné;
- déterminer si le jeton d'authentification a été généré avec une clef de chiffrement propre audit équipement : on peut ainsi vérifier que le jeton d'authentification n'a pas été falsifié ou généré par une entité non autorisée.

L'ensemble de ces étapes vise à limiter le risque d'utilisation et de génération frauduleuse d'un jeton d'authentification.

Selon une première variante de réalisation du procédé de filtrage, la règle de filtrage de deuxième niveau autorise le routage vers une entité destinataire d'au moins un paquet dont l'adresse source et le port de communication source sont identiques respectivement à l'adresse source et au port de communication source de ladite requête.

Il est ainsi possible de restreindre la communication avec l'entité destinataire aux seules entités sources identifiées par une même adresse source et un même port de communication source. Si en outre cette adresse source est authentifiée grâce au jeton d'authentification, on peut garantir l'entité source est bien une entité source autorisée.

Selon une deuxième variante de réalisation du procédé de filtrage, la règle de filtrage de deuxième niveau autorise le routage vers une entité destinataire d'au moins un paquet dont le port de communication source est identique au port de communication source de ladite requête et dont l'adresse source est comprise dans une plage d'adresses incluant l'adresse source de ladite requête.

Il est ainsi possible de prendre en compte une modification de l'adresse source de l'entité source, qui serait par exemple consécutive à une redirection d'une requête initiale provenant d'une adresse source initiale.

Le jeton d'authentification, qui, en l'occurrence, est représentatif d'une autorisation d'accès accordée cette requête provenant d'une entité de confiance, est inséré dans la requête qui subira la redirection, afin de garantir, malgré le fait qu'elle ne passe plus par l'entité de confiance, que l'on pourra la reconnaître comme étant une requête autorisée à être routée vers une entité destinataire.

Selon une variante du mode de réalisation particulier, le procédé de filtrage comprend une étape d'ajout dans ledit ensemble, après réception de la requête initiale, d'une règle de filtrage, dite de premier niveau, autorisant le routage, vers des moyens de vérification de la validité d'un jeton d'authentification contenu dans une requête, d'au moins un paquet reçu via un port de communication prédéterminé, la requête initiale modifiée étant redirigée lors de l'étape de redirection vers le port de communication prédéterminé.

Selon un cas particulier de cette variante, le procédé de filtrage comprend une étape d'ajout dans ledit ensemble, après réception de la requête initiale, d'une règle de filtrage, dite de premier niveau, autorisant le routage, vers des moyens de vérification de la validité d'un jeton d'authentification contenu dans une requête, d'au moins un paquet, reçu via un port de communication prédéterminé dudit équipement, dont l'adresse source est égale à l'adresse source de la requête initiale, quel que soit le port de communication source de la requête ultérieure,
la requête initiale modifiée étant redirigée lors de l'étape de redirection vers le port de communication prédéterminé.

La règle de filtrage de premier niveau est ainsi destinée à être utilisée pour le filtrage de requêtes redirigées avec jeton d'authentification. Elle constitue à première vue une sorte de faille sécuritaire pour le contrôle d'accès au réseau. Cependant, compte-tenu de l'utilisation combinée de cette règle de filtrage de premier niveau temporaire avec un mécanisme d'authentification au moyen du jeton d'authentification, une requête redirigée susceptible de bénéficier de cette pseudo faille, comprendra un jeton d'authentification qui devra être valide, faute de quoi cette requête redirigée ne pourra être routée vers sa destination. On compense ainsi par des mesures fortement sécuritaires (authentification) une mesure peu sécuritaire (règle de filtrage de premier niveau) et l'ensemble de ces mesures garantit au final un haut niveau de sécurité.

En outre, on limite le nombre de port de communication devant être ouverts sur ledit équipement, puisqu'un port de communication déterminé sera utilisé pour les requêtes redirigées. Ce port de communication peut être en outre identique à celui utilisé pour l'émission de la requête initiale, et ce tout en préservant la sécurité du fait de l'utilisation combinée de règles de premier et deuxième niveau et d'un jeton d'authentification.

Selon un mode de réalisation particulier, le procédé de filtrage comprend une étape de suppression de la règle de filtrage de premier niveau après réception d'une requête comprenant ledit jeton d'authentification ou après expiration d'une durée de validité de ladite règle de filtrage de premier niveau.

La règle de filtrage de premier niveau est temporaire et ne peut donc subsister que le temps nécessaire à la redirection de la requête pour laquelle elle a été créée. On restreint ainsi encore risque d'intrusion dans le réseau.

Selon une variante de réalisation, le procédé de filtrage comprend, préalablement à l'étape de vérification, une étape de filtrage de ladite requête reçue par les moyens de filtrage par application dudit ensemble comprenant la règle de filtrage de premier niveau.

La requête subie ainsi un double filtrage : d'abord par la règle de filtrage de premier niveau, puis par la règle de filtrage de deuxième niveau, avec, entre ces deux étapes de filtrage, une vérification de la validité du jeton d'authentification. La requête ne sera au final routée vers sa destination qu'après avoir passé avec succès ces deux étapes de filtrage et l'étape de vérification. L'ensemble est donc particulièrement performant du point de vue de la sécurité tout en restant générique.

Les différents modes de réalisation et variantes mentionnés ci-dessus sont combinables entre eux pour la mise en oeuvre du procédé de filtrage.

L'invention concerne, selon un deuxième aspect, un système de filtrage de paquets selon la revendication 10.

L'invention concerne aussi une passerelle selon la revendication 12.

Les avantages énoncés pour le procédé de filtrage selon l'invention sont transposables directement au système de filtrage selon l'invention ainsi qu'aux différents modes de réalisation de ce système définis ci-dessous.

Selon un mode de réalisation du système de filtrage, les moyens de routage comprennent:
- des moyens d'ajout audit ensemble, lorsque ledit jeton d'authentification est valide, d'une règle de filtrage, dite de deuxième niveau, autorisant le routage d'un paquet vers une entité destinataire si l'entité source de ce paquet est identique à l'entité source de ladite requête;
- des moyens d'envoi de la requête ultérieure vers les moyens de filtrage.

Selon un mode de réalisation, le système de filtrage comprend en outre
- des moyens de génération d'un jeton d'authentification après réception d'une requête initiale par l'intermédiaire d'une entité de confiance,
- une étape de modification d'une requête initiale par insertion dans cette requête initiale dudit jeton d'authentification,
- une étape de redirection de la requête initiale modifiée afin que la requête initiale modifiée soit réémise sans passer par l'intermédiaire de ladite entité de confiance.

Plus généralement, le système de filtrage selon l'invention comprend des moyens de mise en oeuvre des étapes du procédé selon l'invention.

Les différents modes de réalisation et variantes mentionnés ci-dessus sont combinables entre eux pour la mise en oeuvre du système de filtrage.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un système de filtrage et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus. Le support d'informations peut être n'importe quelle entité ou dispositif capable de stocker le programme.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'un mode de réalisation du procédé selon l'invention.

L'invention est décrite dans le cas d'exemple du traitement d'une requête d'accès à un contenu, mais elle est applicable à tout autre type de requête : requête d'interrogation d'un serveur, requête d'accès à un service, etc. La notion de requête est à interpréter ici au sens large : il s'agit d'un envoi de données émis vers une entité destinataire par une entité source, une requête étant constituée par un ou plusieurs paquet de données envoyés successivement.

L'invention est décrite également dans le cas d'exemple où cette requête est émise conformément au protocole HTTP (« Hypertext Transfer Protocol ») et utilise des adresses IP (« Internet Protocol ») pour identifier les entités sources et destinataires des requêtes / paquets.

En utilisant une terminologie usuelle, on parlera notamment d'adresse et port de communication source (respectivement destination) d'un paquet / d'une requête pour désigner l'adresse et le port de communication d'une entité source (respectivement d'une entité destinataire) de ce paquet / cette requête.

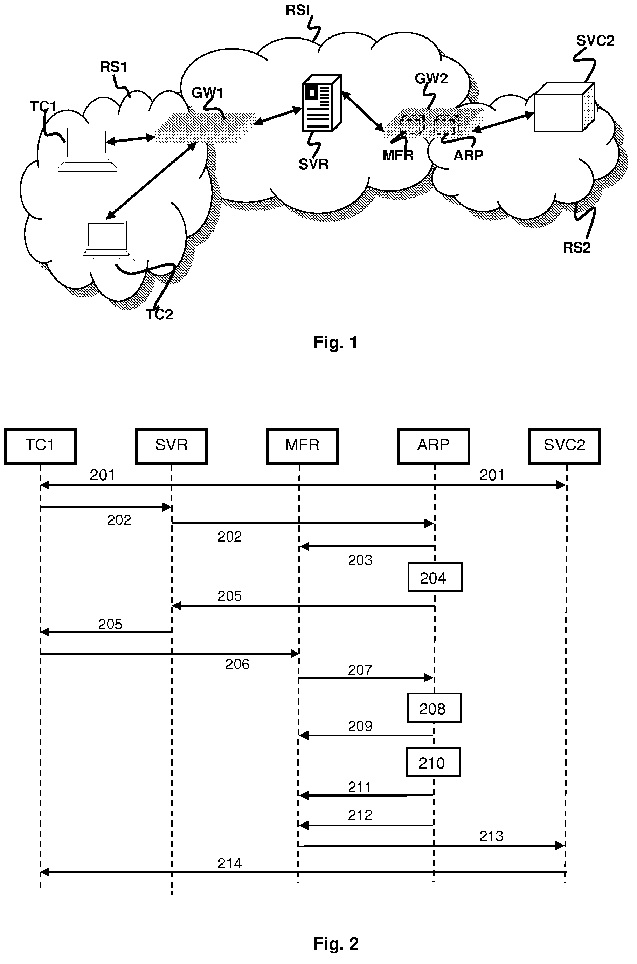

Le système représenté à la figure 1 est organisé autour de trois réseaux
- un premier réseau RS1, par exemple un réseau d'entreprise ;
- un deuxième réseau RS2, par exemple un réseau domestique ;
- un réseau RI permettant l'interconnexion des réseaux RS1 et RS2, par exemple le réseau Internet.

Au sein du réseau RS1 sont connectés les équipements suivants :
- un premier terminal client TC1, sous forme par exemple d'ordinateur personnel ;
- un deuxième terminal client TC2, sous forme par exemple d'ordinateur personnel ;
- une passerelle GW1, servant pour les équipements connectés au réseau RS1 de passerelle d'accès au réseau RSI et via laquelle les terminaux TC1 et TC2 peuvent établir des communications avec une entité hors du réseau RS1 ; cette passerelle sert en particulier de pare-feu et proxy pour le réseau RS1, filtrant les communications entrantes ou sortantes du réseau RS1 et attribuant des adresses et ports de communication publics aux communications entrantes ou sortantes de ce réseau RS1.

On suppose ainsi ici que le terminal client TC1 est connecté à un réseau RS1 dont le trafic sortant est filtré. A ce titre, le terminal client TC1 ne peut usuellement communiquer avec les entités du réseau domestique RS2 distant que via des ports de communication destination «standards » (comme par exemple et sans perte de généralité, le port de communication 80 utilisé comme port par défaut pour le protocole http, « Hypertext Transfer Protocol »). Le terminal client TC2 a également vocation à accéder au réseau domestique RS2 distant, avec ses propres autorisations qui peuvent être distinctes de celles octroyées au terminal client TC1. L'invention vient prendre en compte ces différentes contraintes au travers d'un mécanisme générique de contrôle d'accès au réseau RS2.

Au sein du réseau RS2 sont connectés les équipements suivants :
- un serveur de contenus SVC2, sur lequel est enregistré une pluralité de contenus multimédia;
- une passerelle GW2, servant pour les équipements connectés au réseau RS2 de passerelle d'accès au réseau RSI et via laquelle le serveur de contenus SVC2 est joignable par entité hors du réseau RS2 ; cette passerelle GW2 sert en particulier de pare-feu et proxy pour le réseau RS2, filtrant les communications entrantes ou sortantes du réseau RS2 et attribuant des adresses et ports de communication publics aux communications entrantes ou sortantes de ce réseau RS2.

La passerelle GW2 est équipée d'un pare-feu, incorporant un module MFR de filtrage et de routage, dénommé par le suite « module de filtrage » en abrégé, en charge d'appliquer un ensemble de règles de filtrage et de routage définissant dans quelles conditions un paquet de données entrant dans le réseau est autorisé ou non à être routé vers une entité destinataire. De telles règles de filtrage et de routage sont également appelées règles de contrôle d'accès. Elles sont usuellement mémorisées sous forme d'une liste ordonnée (ACL, « Access Control List »), avec un ordre prédéfini de prise en compte. Par la suite, on utilisera la dénomination de règle de filtrage.

Dans l'hypothèse où un paquet de données bénéficie d'une autorisation pour être routé vers une entité destinataire, le module de filtrage MFR est en charge d'envoyer le paquet de données considéré vers cette entité destinataire : soit une entité destinataire définie dans ce paquet de données, soit entité destinataire définie dans une règle de filtrage et de routage.

La passerelle GW2 est équipée d'un module ARP mettant en oeuvre la fonction de proxy inverse (en anglais « Reverse Proxy »), dénommé par la suite « agent proxy » en abrégé, en charge notamment de traiter les requêtes d'accès aux ressources internes du réseau RS2 et de contrôler l'accès à ces ressources internes. L'agent proxy ARP est configuré pour, en cas de besoin, créer une ou plusieurs des règles de filtrage et pour les ajouter à l'ensemble de règles de filtrage géré par le module de filtrage MFR afin que ce module de filtrage applique les règles ainsi créées.

Dans ce qui suit, on utilisera les notations suivantes :
- « @TC1_pub » pour l'adresse réseau publique du terminal client TC1, attribuée par la passerelle GW1 et utilisée par le terminal client TC1 pour communiquer hors du réseau RS1;
- « nTC1_pub » pour le port de communication public du terminal client TC1, attribué par la passerelle GW1 et utilisé par le terminal client TC1 pour communiquer hors du réseau RS1;
- « @TC2_pub » pour l'adresse réseau publique du terminal client TC2, attribuée par la passerelle GW1 et utilisée utilisé par le terminal client TC2 pour communiquer hors du réseau RS1;
- « nTC2_pub » pour le port de communication public du terminal client TC2, attribué par la passerelle GW1 et utilisé par le terminal client TC2 pour communiquer hors du réseau RS1;
- « @GW1_pub » l'adresse réseau publique de la passerelle GW1 ;
- « @GW2_pub » l'adresse réseau publique de la passerelle GW2 ;
- « nGW2_pub » un port de communication public de la passerelle GW2.

Un premier mode de réalisation du procédé de filtrage selon l'invention est décrit plus en détail au regard de la figure 2.

On considère dans ce premier mode de réalisation que l'adresse @TC1_pub= @TC2_pub=@GW1_pub est la seule adresse publique qu'utilise la passerelle GW1 pour les communications des terminaux clients TC1, TC2, etc. Autrement dit, @GW1_pub est l'adresse publique commune à tous ces terminaux clients.

Lors d'une étape **200**, le terminal client TC1 s'authentifie auprès du serveur relais SVR. Le serveur relais SVR procède à l'authentification du terminal client TC1 et vérifie que ce terminal client TC1 est effectivement autorisé à communiquer avec la passerelle GW2 et les entités du réseau RS2 accessible via cette passerelle GW2.

Ce serveur relais SVR constitue une entité « de confiance » du point de vue de la passerelle GW2, contrairement à toute autre entité qui, depuis Internet chercherait à accéder directement à la passerelle GW2 au moyen de son adresse publique, sans y avoir été explicitement autorisée. Le serveur relais SVR et la passerelle GW2 mettent par exemple en oeuvre un processus d'authentification mutuelle à l'issue duquel la passerelle GW2 enregistre le serveur relais SVR comme faisant partie des entités de confiance en provenance desquelles les paquets sont autorisés à être routés vers une entité destinataire dans le réseau RS2. Ou, plus simplement, l'adresse du serveur relais est connue par la passerelle GW2 (elle peut faire partie de sa configuration « usine ») et fait donc foi.

Lors d'une étape **201**, au cours de laquelle un utilisateur U1 du terminal client TC1 demande à parcourir l'arborescence des contenus multimédia en accès partagé, stockés dans le serveur de contenu SC2. Il s'ensuit un dialogue entre le serveur relais SVR, l'agent proxy ARP de la passerelle GW2 et le serveur de contenus SVC2, dialogue au cours duquel l'agent proxy ARP vérifie les autorisations décrivant les droits d'accès de l'utilisateur U1 distant pour la ressource SVC2 du réseau RS2. Cette étape 202 est peu coûteuse en ressources et en quantité d'information transmise, car elle se résume à une succession d'opérations de parcours de dossiers dans un système de fichiers.

Au final, on suppose que l'utilisateur U1 sélectionne un contenu C2, stocké dans le serveur de contenu SC2 puis demande à charger ce contenu C2 dans le terminal client TC1, en vue d'une restitution à la volée de ce contenu (cas par exemple d'un morceau de musique diffusé en streaming par le serveur de contenu SC2) ou encore d'un enregistrement préalable de ce contenu.

La transmission d'un contenu multimédia est potentiellement coûteuse, tant en ressources réseaux qu'en capacité de traitement. Les étapes suivantes, décrites ci-dessous, évitent de solliciter inutilement les ressources mémoire et CPU de la passerelle GW2 (qui doit, autant que faire se peut, être cantonnée à sa fonction de routage) et de créer un goulet d'étranglement au niveau du serveur relais SVR ou de doter ce serveur de moyens de gestion de sa charge.

Lors de l'étape **202**, suite à la demande de l'utilisateur U1, une requête initiale, pour l'accès au contenu C2, est émise par le terminal client TC1, transmise au serveur relais SVR qui la valide puis l'achemine vers l'agent proxy ARP de la passerelle GW2. Celui-ci, par un mécanisme connu de l'homme de métier, détecte que cette requête initiale est une requête d'accès à un contenu stocké sur le serveur de contenus SVC2.

Un tel mécanisme de détection est typiquement basé sur la détection de primitives de protocoles standards, telles que la primitive « GET » du protocole http.

Cette requête initiale comprenant par exemple l'URL (Uniform Resource Locator) du contenu C2 et identifiant le serveur de contenus SVC2 comme entité auprès de laquelle ce contenu est susceptible d'être obtenu. http: //192.168.0.1.0/Album1/Vacances/photo99.jpg

Lors de l'étape 202 d'envoi de la requête initiale, l'adresse @TC1_pub est transmise à l'agent proxy ARP par le serveur relais SVR (par exemple, dans l'en-tête http ou dans l'URL de cette requête initiale).

Lors de l'étape **203**, à réception de cette requête initiale en provenance du serveur relais SVR, l'agent proxy ARP crée dynamiquement une premier règle de filtrage temporaire, avec une durée de validité courte, à appliquer par le module de filtrage MFR de la passerelle GW2, ayant pour but de router temporairement vers l'agent proxy ARP tout paquet de données ultérieur, entrant dans le réseau RS2, vers l'adresse publique @GW2_pub de la passerelle GW2 et sur un port de communication donné nGW2_pub (par exemple le port de communication 80) en provenance de l'adresse @TC1_pub, quel que soit le port de communication source de ce paquet. Cette première règle de filtrage est ajoutée à l'ensemble de règles de filtrage géré et appliqué par le module de filtrage MFR.

La première règle de filtrage est également appelée règle de premier niveau, en ce qu'elle sera appliquée avant une autre règle, dite de deuxième niveau, comme cela sera décrit plus loin.

Le port de communication source utilisé par la passerelle GW1 pour les communications du terminal client TC1 est susceptible de changer (selon la ou les entités via laquelle ces communications sont routées ou en cas de redirection de requête): ce changement de port a même un caractère préconisé/standardisé et il empêche la connaissance a priori, au niveau de l'agent proxy ARP du port source qui sera utilisé par la passerelle GW1 du terminal client TC1 lorsque celui-ci, pour la première fois, s'adressera en direct à la passerelle GW2. En conséquence, afin de prendre en compte tout port de communication susceptible d'être utilisé ultérieurement par la passerelle GW1 pour les communications du terminal client TC1, la première règle de filtrage n'impose pas de conditions sur le port de communication source d'un paquet à filtrer / router.

Il est à noter que le port de communication utilisé dans cette première règle est unique, affecté et donc commun aux différents paquets provenant d'une adresse source donnée. Il permet de mettre en place une méthode d'authentification basée sur l'adresse source d'un paquet, indépendamment du port de communication utilisé par un paquet ultérieur.

Cette première règle de filtrage est représentée dans le tableau ci-dessous. La dernière colonne spécifie une ou plusieurs actions à exécuter lorsqu'un paquet vérifie les conditions spécifiées dans les autres colonnes.

| Adresse source | Port source | Adresse destination | Port destination | Protocole | Action(s) |
|---|---|---|---|---|---|
| @GW1_pub | * | @GW2_pub | 80 | HTTP | Router vers agent RP Durée de validité limitée à N secondes |

L'étoile (« * ») dans la colonne « port source » signifie que cette règle n'impose pas de conditions sur le port de communication source d'un paquet à filtrer : quel que soit le port de communication, si les autres conditions sont vérifiées, alors le paquet à filtrer sera routé vers l'agent proxy ARP, selon ce qui est spécifié par la colonne « Action ».

Cette première règle de filtrage est une règle temporaire : elle doit être supprimée au plus tard à l'expiration d'une durée de validité (N secondes) définie pour cette première règle. Pour des raisons de sécurité, cette durée de validité est très courte, de l'ordre de 2 à 3 secondes maximum, c'est-à-dire à peine plus que le temps nécessaire pour la redirection de la requête initiale et la réception de la requête redirigée (étapes 204 à 207 suivantes). On limite ainsi des tentatives frauduleuses d'entrée dans le réseau RS2 avec utilisation comme adresse source de l'adresse @TC1_pub, qui ne proviendraient pas du terminal client TC1.

A ce stade en effet, tout terminal client autre que le terminal client TC1 (par exemple TC2) est également autorisé à émettre du trafic vers la passerelle GW2. Il importe donc, dans les étapes qui suivent, de savoir authentifier le terminal client TC1 à partir de son adresse source afin de distinguer les requêtes provenant d'un terminal autorisé (TC1) de celles provenant d'un autre terminal (TC2).

Lors de l'étape **204**, sitôt la première règle de filtrage créée et activée par le module de filtrage MFR, l'agent proxy ARP prépare la réponse à la requête initiale reçue à l'étape 202 via le serveur relais SVR.

Cette requête initiale comprenant une URL identifiant et localisant le contenu sur le serveur de contenus SVC2. Cette URL est de la forme :

### http://192.168.0.10/Album1/Vacances/photo99.ipg

Cette URL est donc connue de l'agent proxy ARP et va être modifiée par cet agent de la manière qui suit.

L'agent proxy ARP génère un jeton d'authentification temporaire, sous forme par exemple de séquence alphanumérique, servant à authentifier l'émetteur de la requête initiale. Ce jeton d'authentification est inséré dans la requête initiale, la requête ainsi modifiée étant redirigée ensuite afin que cette requête modifiée soit réémise par le terminal client TC1 sans passer par l'intermédiaire du serveur relais SVR.

Le jeton d'authentification est généré par une fonction de hachage numérique (en anglais « hash »), réputée robuste et connue de l'homme de métier (par exemple un algorithme de hachage de type MD5, RIPE MD160, etc.), à partir de données choisies parmi les données suivantes :
- l'adresse source de la requête initiale ;
- l'adresse destination de la requête initiale ou l'adresse publique de la passerelle GW2 ;
- une identification du contenu.

Ce jeton d'authentification a les propriétés suivantes
- il ne doit pas être falsifiable (le terminal client TC1 ne doit pas pouvoir générer « par hasard » un tel jeton) ;
- seul l'agent proxy ARP de la passerelle GW2 est capable de générer un tel jeton (on utilise dans l'algorithme de hachage une clef de chiffrement propre à cet agent proxy ARP et connue seulement de cet agent proxy)
- il est à usage unique ;
- il est propre au contenu demandé, par exemple généré à partir d'une identification du contenu (URL ou autre identifiant) : un jeton n'est ainsi valide que pour un contenu donné ;
- il est propre à une adresse source : un jeton n'est ainsi valide que pour une adresse source donnée ;
- il a une durée de validité limitée, par exemple de l'ordre de quelques secondes.

D'autres propriétés de sécurité peuvent être imposées à la sémantique du jeton d'authentification, sans perte de généralité pour la présente invention.

Exemple de jeton d'authentification: hf3ffaba5be643ea0

Ce jeton d'authentification est inséré ou accolé à la réponse à la requête initiale générée par l'agent proxy ARP. Lors de la génération de cette réponse, on utilise de préférence un mécanisme qui ne suppose aucune implémentation spécifique sur le serveur de contenus SVC2 ni sur le terminal client TC1 pour traiter la réponse ainsi générée.

Un exemple d'un tel mécanisme générique qui convient pour insérer le jeton d'authentification est de l'insérer en paramètre « GET » à l'URL initiale, l'URL ainsi modifiée étant utilisée pour former la réponse à la requête initiale.

Exemple d'URL modifiée avec un jeton d'authentification : http://192.168.0.10/Album1/Vacances/photo99.jpg&jeton=f3ffaba5be643ea0

La requête initiale va en outre être redirigée. Pour mettre en oeuvre cette redirection, des modifications supplémentaires sont effectuées par l'agent Reverse Proxy sur la réponse générée : ajout d'un code de redirection indiquant que la requête initiale doit être réémise et modification de cette requête initiale afin qu'elle soit dirigée lors de sa rémission vers l'adresse publique @GW2_pub de la passerelle GW2 et vers le port de communication nGW2_pub de la passerelle GW2, port ayant été choisi dans la première règle de filtrage comme port de communication destination autorisé pour les requêtes ultérieures.

Lorsque la requête initiale est émise conformément au protocole http et comprend une URL cible, cette URL est modifiée de manière à contenir l'adresse publique @GW2_pub de la passerelle GW2 et le port de communication nGW2_pub de la passerelle GW2, et à désigner la passerelle GW2 comme entité auprès de laquelle le contenu C1 est susceptible d'être obtenu.

Par exemple, si l'adresse publique @GW2_pub est « 193.210.3.5 » et le port de communication nGW2_pub est le port 80 , l'URL modifiée sera de la forme suivante : http://193.210.3.5:80/192.168.0.10/Albium/Vacances/photo99.jpg&jeton=f3ffaba5be643ea0

Remarque : les éventuels mécanismes de substitution de chaînes de caractères dans une URL, ayant pour but de masquer l'adresse privée du serveur de contenus SVC2 (ici, « 192.168.0.10) et/ou le chemin d'accès au contenu (ici, « /Album1/Vacances/photo99.jpg ») ne sont pas décrits ici mais peuvent être utilisés en tant que de besoin.

Lors de l'étape **205**, la réponse à la requête initiale, comprenant l'URL modifiée comme décrit ci-dessus, comprenant notamment le jeton d'authentification et un code de redirection, est envoyée au serveur relais SVR qui la transmet ensuite au terminal client TC1.

Lors de l'étape **206**, suite à la réception de la réponse à la requête initiale, le terminal client TC1 génère une deuxième requête http à partir de l'URL modifiée incluse dans la réponse reçue. Cette deuxième requête est émise par le terminal client TC1 par l'intermédiaire de la passerelle GW1 : elle a comme adresse source @TC1_pub et comme port de communication source le port de communication nTC1_pub, qui selon le document normatif RFC 2616 diffusé par l'IETF doit être propre à cette deuxième requête et est donc a priori distinct du port de communication source de la requête initiale.

Le couple constitué par l'adresse source @TC1_pub et le port de communication nTC1_pub est représentatif non seulement du terminal client TC1 mais aussi de l'application cliente de ce terminal qui émet cette deuxième requête, en ce que ce port de communication a été affecté à cette application cliente par la passerelle GW1 pour la mise en communication avec le serveur de contenus SVC2.

Le port de communication nTC1_pub est à ce stade a priori inconnu de la passerelle GW2 et ne saurait être déterminé par cette passerelle GW2 par quelque mécanisme que ce soit.

La deuxième requête, comprenant le jeton d'authentification et l'URL modifiée, est ainsi émise vers l'adresse publique @GW2_pub de la passerelle GW2 et vers le port de communication nGW2_pub de cette passerelle GW2, sans passer par le serveur relais SVR.

Lors de l'étape **207**, lorsque la deuxième requête http parvient à la passerelle GW2, elle a pour adresse source @TC1_pub et, en vertu de la première règle de filtrage, elle est routée par le module de filtrage MFR vers l'agent proxy ARP.

Lors de l'étape **208**, l'agent proxy ARP cherche alors la présence d'un jeton d'authentification dans cette deuxième requête, en l'occurrence dans l'URL contenue dans cette deuxième requête. Si l'agent proxy ARP trouve un jeton d'authentification, il l'extrait et en vérifie la validité.

Cette vérification comprend au moins une des étapes suivantes :
- déterminer si une durée de validité du jeton d'authentification est expirée : dans ce cas le jeton d'authentification est considéré comme invalide;
- déterminer si le jeton d'authentification était déjà présent / utilisé dans au moins une autre requête reçue antérieurement à cette deuxième requête: dans ce cas le jeton d'authentification est considéré comme invalide (jeton à usage unique);
- déterminer si le jeton d'authentification a été généré avec une clef de chiffrement propre à l'agent proxy ARP : dans ce cas le jeton d'authentification est considéré comme valide et garantit qu'il s'agit d'une requête ayant déjà été reçue par l'agent proxy ARP ;
- déterminer si le jeton d'authentification correspond à l'adresse source de la deuxième requête et/ou au contenu pour lequel cette deuxième requête est émise, c'est-à-dire s'il forme un condensât (« hash ») exact de cette adresse source et/ou de l'URL du contenu: dans ce cas le jeton d'authentification est considéré comme valide et garantit par sa présence que la source et/ou le contenu de la deuxième requête sont identiques à la source et/ou au contenu de la requête initiale.

Lors de l'étape **209**, si le jeton est absent ou invalide, la deuxième requête est ignorée par l'agent proxy ARP et n'est pas transmise vers une entité destinataire dans le réseau RS2. Si au contraire, le jeton est valide, le Reverse Proxy supprime la première règle de filtrage de l'ensemble de règles de filtrage géré par le module de filtrage MFR, sauf si celle-ci a déjà été supprimée du fait de l'expiration de sa durée de validité. Les étapes suivantes 210-214 sont exécutées si le jeton d'authentification est valide.

Lors de l'étape **210**, l'agent proxy ARP obtient le port de communication source de la deuxième requête, en l'extrayant par exemple de l'en-tête de cette deuxième requête.

Lors de l'étape **211**, l'agent proxy ARP crée une deuxième règle de filtrage, temporaire elle aussi, puis ajoute cette règle à l'ensemble de règles de filtrage appliquées par le module de filtrage MFR.

Cette deuxième règle de filtrage est également appelée règle de deuxième niveau, en ce qu'elle est destinée à être appliquée après une autre règle dite de premier niveau.

Cette deuxième règle de filtrage autorise le routage d'un paquet vers une entité destinataire de ce paquet si l'entité source de ce paquet est identique à l'entité source de cette deuxième requête, en l'occurrence si l'adresse source et le port de communication source de ce paquet sont identiques à l'adresse source @TC1_pub et au port de communication source nTC1_pub de cette deuxième requête.

| Adresse source | Port source | Adresse destination | Port destination | Protocole | Action(s) |
|---|---|---|---|---|---|
| @GW1_pub | nTC1_pub | @GW2_pub | 80 | HTTP | Autoriser le routage vers une entité destinataire dans le réseau RS2 |
| | | | | | Supprimer la règle après routage du dernier paquet |

Cette deuxième règle doit en outre être supprimée (cf. colonne « Action(s) ») après routage du dernier paquet d'une requête vérifiant les conditions d'adresse source, de port de communication source, d'adresse destination et de port de communication destination spécifiées dans cette deuxième règle.

Lors de l'étape **212**, l'agent proxy ARP renvoie la deuxième requête vers le module de filtrage MFR pour que la deuxième règle de filtrage lui soit appliquée et que cette deuxième requête soit routée au final, lors de l'étape **213** vers l'entité destinataire de cette deuxième requête, en l'occurrence vers le serveur de contenus SVC2.

La deuxième requête est ainsi elle-même soumise lors de l'étape 212 à la deuxième règle nouvellement créée à réception de cette deuxième requête. Un tel mécanisme de création dynamique de règle de routage, à laquelle est soumise à la volée une requête qui a caractérisé les conditions de filtrage définies par cette deuxième règle (notamment du fait de la détection à la volée du port de communication source) suppose une intime intégration de bas niveau entre le Reverse Proxy RP et le module de filtrage et routage MFR mettant en oeuvre la pile protocolaire dans la passerelle GW2.

Par un simple mécanisme de routage entrant classique, la requête initiale venant directement du client TC1 est ainsi routée par la passerelle GW2 vers le serveur de contenus SVC2.

Lors de l'étape **214**, le serveur de contenus SVC2 reçoit la deuxième requête et y répond en envoyant des paquets de données constitutifs du contenu C1 vers le terminal client TC1.

Si un second terminal client TC2 du même réseau RS1 que le terminal client TC1, dont l'adresse publique est également @TC1_pub, souhaite accéder à une ressource présente sur le réseau RS2 avant que la deuxième règle de filtrage ne soit supprimée, et si l'agent proxy ARP reçoit une requête initiale en provenance cette fois du terminal client TC2, la troisième règle de filtrage temporaire, à durée de validité limitée, créée par cet agent à réception de cette autre requête initiale, prend en compte le port de communication nTC1_pub couramment utilisé par le terminal client TC1 et diffère de la première règle de filtrage uniquement en ce que la condition sur le port de communication source est que celui-ci soit différent du port de communication nTC1_pub en cours d'utilisation.

Cette troisième règle de filtrage est, comme la première règle de filtrage, une règle de premier niveau.

| Adresse source | Port source | Adresse destination | Port destination | Protocole | Action(s) |
|---|---|---|---|---|---|
| @GW1_pub | *, ≠nTC1_pub | @GW2_pub | 80 | HTTP | Router vers agent RP Durée de validité limitée à N secondes |

A cette étape, l'ensemble de règles de filtrage/routage géré par le module de filtrage MFR comprend simultanément les deuxième et troisième règles selon le tableau ci-dessous :

| Adresse source | Port source | Adresse destination | Port destination | Protocole | Action(s) |
|---|---|---|---|---|---|
| @GW1_pub | * , ≠nTC1_pub | @GW2_pub | 80 | HTTP | Router vers agent RP Durée de validité limitée à N secondes |
| @GW1_pub | nTC1_pub | @GW2_pub | 80 | HTTP | Autoriser le routage vers une entité destinataire dans le réseau RS2 |
| | | | | | Supprimer la règle après routage du dernier paquet |

En alternative, au lieu de gérer une exclusion sur le port de communication source dans la troisième règle de filtrage, l'ordre des règles et le mode de balayage de l'ensemble de règles peut être tel que la deuxième règle soit toujours appliquée prioritairement par rapport à la troisième règle.

Ces deux alternatives permettent de garantir qu'un paquet, dont l'adresse source est @TC1_pub et le port de communication source est nTC1_pub, soit bien routé vers son entité destinataire (i.e. vers le serveur de contenus SVC2) et non pas vers l'agent Reverse Proxy.

Après redirection de la requête initiale en provenance du terminal client TC2 puis réception de la requête redirigée en résultant (les étapes 204 à 210 étant répétées pour le requête initiale en provenance du terminal client TC2), l'agent Reverse Proxy crée une quatrième règle de filtrage, qui autorise le routage d'un paquet vers une entité destinataire de ce paquet si l'entité source de ce paquet est identique à l'entité source de la requête redirigée, en l'occurrence si l'adresse source et le port de communication source de ce paquet sont identiques à l'adresse source @TC2_pub et au port de communication source nTC2_pub de cette requête redirigée.

Cette quatrième règle de filtrage est, comme la première règle de filtrage, une règle de deuxième niveau.

| Adresse source | Port source | Adresse destination | Port destination | Protocole | Action(s) |
|---|---|---|---|---|---|
| @GW1_pub | nTC2_pub | @GW2_pub | 80 | HTTP | Autoriser le routage vers une entité destinataire dans le réseau RS2 |
| | | | | | Supprimer la règle après routage du dernier paquet |

Cette quatrième règle de filtrage doit, comme la deuxième règle, être supprimée (cf. colonne « Action(s) ») après routage du dernier paquet d'une requête vérifiant les conditions d'adresse source, de port de communication source, d'adresse destination et de port de communication destination spécifiées dans cette deuxième règle.

Les principes exposés ci-dessus, lorsque l'on est en présence de plus d'un terminal accédant simultanément au réseau RS2, se généralisent à un nombre quelconque de terminaux, par gestion des exclusions des ports de communication source utilisés par ces terminaux dans la définition de la règle de filtrage temporaire qui route les requêtes vers l'agent Reverse Proxy.

Dans un deuxième mode de réalisation du procédé de filtrage selon l'invention, dans l'hypothèse où @TC1_pub est différente de @TC2_pub, les règles suivantes sont créées successivement pour les requêtes provenant du terminal client TC1:
- à réception de la requête initiale, une première règle de filtrage de premier niveau définie comme suit :

| Adresse source | Port source | Adresse destination | Port destination | Protocole | Action(s) |
|---|---|---|---|---|---|
| @TC1_pub | * | @GW2_pub | 80 | HTTP | Router vers agent RP Durée de validité limitée à N secondes |

- à réception d'une requête redirigée avec jeton d'authentification valide, une deuxième règle de filtrage de deuxième niveau définie comme suit : :

| Adresse source | Port source | Adresse destination | Port destination | Protocole | Action(s) |
|---|---|---|---|---|---|
| @TC1_pub | nTC1_pub | @GW2_pub | 80 | HTTP | Autoriser le routage vers une entité destinataire dans le réseau RS2 |
| | | | | | Supprimer la règle après routage du dernier paquet |

De même, pour les requêtes provenant du terminal client TC2, les règles suivantes seront successivement créées :
- à réception de la requête initiale, une première règle de filtrage de premier niveau définie comme suit :

| Adresse source | Port source | Adresse destination | Port destination | Protocole | Action(s) |
|---|---|---|---|---|---|
| @TC2_pub | * | @GW2_pub | 80 | HTTP | Router vers agent RP Durée de validité limitée à N secondes |

- à réception d'une requête redirigée avec jeton d'authentification valide, une deuxième règle de filtrage de deuxième niveau définie comme suit :

| Adresse source | Port source | Adresse destination | Port destination | Protocole | Action(s) |
|---|---|---|---|---|---|
| @TC2_pub | nTC2_pub | @GW2_pub | 80 | HTTP | Autoriser le routage vers une entité destinataire dans le réseau RS2 |
| | | | | | Supprimer la règle après routage du dernier paquet |

A noter que, dans ce deuxième mode de réalisation, aucune exclusion de port de communication n'est nécessaire à réception d'une requête initiale puisque chacune provient, par hypothèse, d'une adresse source différente.

Dans un troisième mode de réalisation du procédé de filtrage selon l'invention, dans l'hypothèse la plus défavorable, où pour un même terminal client TC1, la passerelle utiliserait pour la requête initiale et la requête redirigée deux adresses @TC1_pub et @TC1'_pub différentes, il est possible, au lieu d'utiliser l'adresse @TC1_pub, une plage continue [@11, @12] d'adresses englobant l'adresse source publique utilisée @TC1_pub dans la requête initiale. Dans ce troisième mode de réalisation, on remplace donc l'adresse @GW1_pub, utilisée dans la définition dans des règles de filtrage du premier mode de réalisation, par cette plage d'adresse [@11, @12].

### Application de l'invention

L'invention est applicable pour l'accès distant à un réseau local, par exemple un réseau domestique ou un réseau d'entreprise. Elle permet de prendre en compte les contraintes d'exploitation du réseau source RS1 lorsque la politique de sécurité y impose des règles de traversée de proxy.

Elle permet de gérer l'accès à un même réseau par un ou plusieurs terminaux clients TC1, TC2 par utilisation, sur la passerelle GW2 d'accès au réseau destinataire, d'un port de communication standard unique, commun à ces différents terminaux.

Elle repose sur un mécanisme générique de redirection d'une requête initiale, relayée par une entité de confiance, avec insertion d'un jeton d'authentification dans la requête redirigée, afin de pouvoir authentifier l'émetteur de la requête redirigée tout en garantissant que la requête redirigée ne soit plus relayée par cette entité relais.

Par analyse du jeton d'authentification reçu dans une requête redirigée, il devient possible de déterminer qu'il s'agit d'une requête autorisée et de soumettre à la volée cette requête redirigée à une règle de filtrage et de routage créée dynamiquement et faisant intervenir un critère sur le port de communication source défini à partir du port de communication source de la requête redirigée.

Le champ d'application correspond à des situations aussi diverses que la visualisation, le téléchargement, le transfert par un utilisateur distant de contenus multimédia présents sur un serveur multimédia de ce réseau domestique ou bien le contrôle à distance, par un tiers de confiance, d'appareils de la maison (gestion de l'énergie, éclairage, arrosage, ouvrants...) équipés d'une interface réseau en permettant le pilotage par un équipement de contrôle.

## Revendications

1. Procédé de filtrage de paquets mis en oeuvre par un équipement de filtrage (GW2) comprenant des moyens (MF) de filtrage pour déterminer, par application d'un ensemble d'au moins une règle de filtrage, si un paquet est autorisé à être routé vers une entité destinataire , le procédé comprenant :
- une étape de génération d'un jeton d'authentification après réception, par l'intermédiaire d'une entité de confiance, d'une requête initiale ne comprenant pas de jeton d'authentification,
- une étape de modification de la requête initiale par insertion dans cette requête initiale dudit jeton d'authentification,
- une étape de redirection de la requête initiale modifiée afin que la requête initiale modifiée soit réémise sans passer par l'intermédiaire de l'entité de confiance,
- une étape (208) de vérification de la validité dudit jeton d'authentification inséré dans une deuxième requête générée à partir de ladite requête initiale modifiée reçue par ledit équipement de filtrage, et, lorsque ledit jeton d'authentification est valide :
- une étape d'ajout (211) audit ensemble d'une règle de filtrage, dite de deuxième niveau, autorisant le routage d'au moins un paquet vers une entité destinataire si l'entité source de ce paquet est identique à l'entité source de ladite deuxième requête;
- une étape de d'envoi (212) de la deuxième requête vers lesdits moyens de filtrage.

2. Procédé selon la revendication 1, comprenant en outre une étape d'ajout dans ledit ensemble, après réception de la requête initiale, d'une règle de filtrage, dite de premier niveau, autorisant le routage, vers des moyens (RP) de vérification de la validité d'un jeton d'authentification contenu dans une requête, d'au moins un paquet reçu via un port de communication prédéterminé,
la requête initiale modifiée étant redirigée lors de l'étape de redirection vers le port de communication prédéterminé.

3. Procédé selon la revendication 1, comprenant une étape de suppression (215) de la règle de filtrage de deuxième niveau dudit ensemble après routage du dernier paquet relatif à ladite deuxième requête.

4. Procédé selon la revendication 1, dans lequel l'étape de vérification comprend au moins une des étapes suivantes :
- déterminer si une durée de validité du jeton d'authentification est expirée ;
- déterminer si le jeton d'authentification a déjà été utilisé dans au moins une autre requête reçue antérieurement à ladite deuxième requête;
- déterminer si le jeton d'authentification correspond à l'adresse source de ladite deuxième requête ;
- déterminer si le jeton d'authentification correspond à un contenu pour lequel ladite deuxième requête est émise ;
- déterminer si le jeton d'authentification a été généré avec une clef de chiffrement propre audit équipement.

5. Procédé selon la revendication 1, dans lequel la règle de filtrage de deuxième niveau autorise le routage vers une entité destinataire d'au moins un paquet dont l'adresse source et le port de communication source sont identiques respectivement à l'adresse source et au port de communication source de ladite deuxième requête.

6. Procédé selon la revendication 1, dans lequel la règle de filtrage de deuxième niveau autorise le routage vers une entité destinataire d'au moins un paquet dont le port de communication source est identique au port de communication source de ladite deuxième requête et dont l'adresse source est comprise dans une plage d'adresses incluant l'adresse source de ladite deuxième requête.

7. Procédé selon la revendication 1, comprenant en outre une étape d'ajout dans ledit ensemble, après réception de la requête initiale, d'une règle de filtrage, dite de premier niveau, autorisant le routage, vers des moyens (RP) de vérification de la validité d'un jeton d'authentification contenu dans une requête ultérieure, d'au moins un paquet, reçu via un port de communication prédéterminé dudit équipement, dont l'adresse source est égale à l'adresse source de la requête initiale, quel que soit le port de communication source de la requête ultérieure,
la requête initiale modifiée étant redirigée lors de l'étape de redirection vers le port de communication prédéterminé.

8. Procédé selon la revendication 2 ou 7, comprenant une étape de suppression de la règle de filtrage de premier niveau après réception d'une requête comprenant ledit jeton d'authentification ou après expiration d'une durée de validité de ladite règle de filtrage de premier niveau.

9. Procédé selon la revendication 8, comprenant, préalablement à l'étape de vérification, une étape de filtrage de ladite deuxième requête reçue par les moyens (MF) de filtrage par application dudit ensemble comprenant la règle de filtrage de premier niveau.

10. Système (GW2) de filtrage de paquets comprenant :
- des moyens (MF) de filtrage pour déterminer, par application d'un ensemble d'au moins une règle de filtrage, si un paquet est autorisé à être routé vers une entité destinataire ;
- des moyens de génération d'un jeton d'authentification après réception, par l'intermédiaire d'une entité de confiance, d'une requête initiale ne comprenant pas de jeton d'authentification,
- des moyens de modification de la requête initiale par insertion dans cette requête initiale dudit jeton d'authentification,
- des moyens de redirection de la requête initiale modifiée afin que la requête initiale modifiée soit réémise sans passer par l'intermédiaire de l'entité de confiance,
- des moyens (RP) de vérification de la validité du jeton d'authentification compris dans une deuxième requête générée à partir de ladite requête initiale modifiée reçue par ledit système de filtrage,
- des moyens (RP) pour, en cas de validité dudit jeton d'authentification, ajouter audit ensemble une règle de filtrage, dite de deuxième niveau, autorisant le routage d'au moins un paquet vers une entité destinataire si l'entité source de ce paquet est identique à l'entité source de ladite deuxième requête et envoyer (212) la deuxième requête vers lesdits moyens de filtrage.

11. Système (GW2) de filtrage de paquets selon la revendication 10 comprenant
- des moyens (RP) d'ajout dans ledit ensemble, après réception d'une requête initiale, d'une règle de filtrage, dite de premier niveau, autorisant le routage vers lesdits moyens (RP) de vérification d'au moins un paquet, reçu via un port de communication prédéterminé dudit équipement, dont l'adresse source est égale à l'adresse source de la requête initiale, quel que soit le port de communication source de la requête ultérieure,
- des moyens (RP) de routage d'une requête ultérieure comprenant un jeton d'authentification valide vers une entité destinataire de cette requête ultérieure.

12. Passerelle comprenant un système (GW2) de filtrage selon l'une quelconque des revendications 10 à 11.

## Patentansprüche

1. Verfahren zur Paketfilterung, das von einer Filterausrüstung (GW2) eingesetzt wird, umfassend Filtermittel (MF), um durch Anwendung mindestens einer Filterregel zu bestimmen, ob ein Paket autorisiert ist, zu einer Zieleinheit geroutet zu werden, wobei das Verfahren umfasst:
- einen Schritt der Erzeugung eines Authentifizierungsjetons nach Erhalt einer Erstanfrage, die keinen Authentifizierungsjeton umfasst, durch eine Vertrauenseinheit,
- einen Schritt der Modifizierung der Erstanfrage durch Einsetzen des Authentifizierungsjetons in diese Erstanfrage,
- einen Schritt der Umleitung der modifizierten Erstanfrage, damit die modifizierte Erstanfrage wieder gesandt wird, ohne über die Vertrauenseinheit zu laufen,
- einen Schritt (208) der Überprüfung der Gültigkeit des Authentifizierungsjetons, der in eine zweite Anfrage eingesetzt ist, die aus der modifizierten Erstanfrage, die durch die Filterausrüstung erhalten wurde, erzeugt wird, und, wenn der Authentifizierungsjeton gültig ist:
- einen Schritt der Hinzufügung (211) einer Filterregel, so genannter zweiter Ebene, zu der Einheit, die das Routen mindestens eines Pakets zu einer Bestimmungseinheit autorisiert, wenn die Quelleneinheit dieses Pakets mit der Quelleneinheit der zweiten Anfrage identisch ist,
- einen Schritt des Sendens (212) der zweiten Anfrage zu den Filtermitteln.

2. Verfahren nach Anspruch 1, ferner umfassend einen Schritt der Hinzufügung einer Filterregel, so genannter erster Ebene zu der Einheit nach Erhalt der Erstanfrage, die das Routen mindestens eines Pakets, das über einen vorbestimmten Kommunikationsanschluss erhalten wird, zu den Mitteln (RP) zur Überprüfung der Gültigkeit eines in einer Anfrage enthaltenen Authentifizierungsjetons autorisiert,
wobei die modifizierte Erstanfrage während des Umleitungsschrittes zu dem vorbestimmten Kommunikationsanschluss umgeleitet wird.

3. Verfahren nach Anspruch 1, umfassend einen Schritt der Unterdrückung (215) der Filterregel der zweiten Ebene der Einheit nach dem Routen des letzten Pakets in Zusammenhang mit der zweiten Anfrage.

4. Verfahren nach Anspruch 1, bei dem der Überprüfungsschritt mindestens einen der folgenden Schritte umfasst:
- Bestimmen, ob eine Gültigkeitsdauer des Authentifizierungsjetons abgelaufen ist;
- Bestimmen, ob der Authentifizierungsjeton bereits in mindestens einer weiteren vor der zweiten Anfrage erhaltenen Anfrage verwendet wurde;
- Bestimmen, ob der Authentifizierungsjeton der Quellenadresse der zweiten Anfrage entspricht;
- Bestimmen, ob der Authentifizierungsjeton einem Inhalt entspricht, für den die zweite Anfrage gesandt wird;
- Bestimmen, ob der Authentifizierungsjeton mit einem der Ausrüstung eigenen Chiffrierschlüssel erzeugt wurde.

5. Verfahren nach Anspruch 1, bei dem die Filterregel der zweiten Ebene das Routen mindestens eines Pakets, dessen Quellenadresse und Quellen-Kommunikationsanschluss mit der Quellenadresse bzw. dem Quellen-Kommunikationsanschluss der zweiten Anfrage identisch sind, zu einer Bestimmungseinheit autorisiert.

6. Verfahren nach Anspruch 1, bei dem die Filterregel der zweiten Ebene das Routen mindestens eines Pakets, dessen Quellen-Kommunikationsanschluss mit dem Quellen-Kommunikationsanschluss der zweiten Anfrage identisch ist, und dessen Quellenadresse in einem Adressenbereich enthalten ist, der die Quellenadresse der zweiten Anfrage umfasst, zu einer Bestimmungseinheit autorisiert.

7. Verfahren nach Anspruch 1, ferner umfassend einen Schritt der Hinzufügung einer Filterregel, so genannter erster Ebene, zu der Einheit nach Erhalt der Erstanfrage, die das Routen mindestens eines Pakets, das über einen vorbestimmten Kommunikationsanschluss der Ausrüstung erhalten wird, dessen Quellenadresse gleich der Quellenadresse der Erstanfrage unabhängig von dem Quellen-Kommunikationsanschluss einer späteren Anfrage ist, zu Mitteln (RP) zur Überprüfung der Gültigkeit eines in der späteren Anfrage enthaltenen Authentifizierungsjetons autorisiert, wobei die modifizierte Erstanfrage während des Umleitungsschrittes zu dem vorbestimmten Kommunikationsanschluss umgeleitet wird.

8. Verfahren nach Anspruch 2 oder 7, umfassend einen Schritt der Unterdrückung der Filterregel erster Ebene nach Erhalt einer Anfrage, umfassend den Authentifizierungsjeton, oder nach Ablauf einer Gültigkeitsdauer der Filterregel erster Ebene.

9. Verfahren nach Anspruch 8, umfassend, vor dem Überprüfungsschritt, einen Filterschritt der zweiten erhaltenen Anfrage durch die Filtermittel (MF) durch Anwendung der Einheit, umfassend die Filterregel erster Ebene.

10. System (GW2) zur Paketfilterung, umfassend:
- Filtermittel (MF), um durch Anwendung mindestens einer Filterregel zu bestimmen, ob ein Paket autorisiert ist, zu einer Bestimmungseinheit geroutet zu werden;
- Mittel zur Erzeugung eines Authentifizierungsjetons nach Erhalt einer Erstanfrage, die keinen Authentifizierungsjeton umfasst, durch eine Vertrauenseinheit,
- Mittel zur Modifizierung der Erstanfrage durch Einsetzen des Authentifizierungsjetons in diese Erstanfrage,
- Mittel zur Umleitung der modifizierten Erstanfrage, damit die modifizierte Erstanfrage wieder gesandt wird, ohne über die Vertrauenseinheit zu laufen,
- Mittel (RP) zur Überprüfung der Gültigkeit des Authentifizierungsjetons, der in einer zweiten Anfrage enthalten ist, die aus der modifizierten Erstanfrage, die durch das Filtersystem erhalten wurde, erzeugt wird;
- Mittel (RP), um im Falle der Gültigkeit des Authentifizierungsjetons eine Filterregel, so genannter zweiter Ebene, zu der Einheit hinzuzufügen, die das Routen mindestens eines Pakets zu einer Bestimmungseinheit autorisiert, wenn die Quelleneinheit dieses Pakets mit der Quelleneinheit der zweiten Anfrage identisch ist, und Senden (212) der zweiten Anfrage zu den Filtermitteln.

11. System (GW2) zur Paketfilterung nach Anspruch 10, umfassend:
- Mittel (RP) zur Hinzufügung einer Filterregel, so genannter erster Ebene, zu der Einheit nach Erhalt einer Erstanfrage, die das Routen mindestens eines Pakets, das über einen vorbestimmten Kommunikationsanschluss der Ausrüstung erhalten wird, dessen Quellenadresse gleich der Quellenadresse der Erstanfrage unabhängig von dem Quellen-Kommunikationsanschluss der späteren Anfrage ist, zu den Mitteln (RP) zur Überprüfung mindestens eines Pakets autorisiert,
- Mittel (RP) zum Routen einer späteren Anfrage, umfassend einen gültigen Authentifizierungsjeton, zu einer Bestimmungseinheit dieser späteren Anfrage.

12. Gateway, umfassend ein Filtersystem (GW2) nach einem der Ansprüche 10 bis 11.

## Claims

1. Process for filtering packets implemented by a filtering device (GW2) comprising filtering means (MF) for determining, by application of a set of at least one filtering rule, if a packet is authorized to be routed to a destination entity, the process comprising:
- a step of generation of an authentication token after receipt, by way of a trusted entity, of an initial request not comprising an authentication token,
- a step of modification of an initial request by insertion of said authentication token into this initial request,
- a step of redirection of the modified initial request so that the modified initial request is re-issued without going through the trusted entity,
- a step (208) of verification of the validity of said authentication token inserted into a second request generated from said modified initial request received by said filtering device, and, when said authentication token is valid:
- a step of addition (211) to said set of a filtering rule, known as a second-level filtering rule, authorizing the routing of at least one packet to a destination entity if the source entity for this packet is identical to the source entity for said second request;
- a step of sending (212) of the second request to said filtering means.

2. Process according to Claim 1, moreover comprising a step of addition to said set, after receipt of the initial request, of a filtering rule, known as a first-level filtering rule, authorizing the routing, to means (RP) for verifying the validity of an authentication token contained in a request, of at least one packet received via a predetermined communication port,
the modified initial request being redirected in the step of redirection to the predetermined communication port.

3. Process according to Claim 1, comprising a step of removal (215) of the second-level filtering rule from said set after routing of the last packet relating to said second request.

4. Process according to Claim 1, in which the verification step comprises at least one of the following steps:
- determining if a validity period for the authentication token has expired;
- determining if the authentication token has already been used in at least one other request received previously to said second request;
- determining if the authentication token corresponds to the source address of said second request;
- determining if the authentication token corresponds to a content for which said second request is issued;
- determining if the authentication token has been generated with an encryption key specific to said device.

5. Process according to Claim 1, in which the second-level filtering rule authorizes the routing to a destination entity for at least one packet for which the source address and the source communication port are respectively identical to the source address and to the source communication port for said second request.

6. Process according to Claim 1, in which the second-level filtering rule authorizes the routing to a destination entity for at least one packet for which the source communication port is identical to the source communication port for said second request and for which the source address is included in a range of addresses including the source address for said second request.

7. Process according to Claim 1, moreover comprising a step of addition to said set, after receipt of the initial request, of a filtering rule, known as a first-level filtering rule, authorizing the routing, to means (RP) for verifying the validity of an authentication token contained in a subsequent request, of at least one packet, received via a predetermined communication port of said device, for which the source address is equal to the source address for the initial request, whatever the source communication port for the subsequent request,
the modified initial request being redirected in the step of redirection to the predetermined communication port.

8. Process according to Claim 2 or 7, comprising a step of removal of the first-level filtering rule after receipt of a request comprising said authentication token or after expiry of a validity period for said first-level filtering rule.

9. Process according to Claim 8, comprising, previously to the verification step, a step of filtering of said second request received by the filtering means (MF) by application of said set comprising the first-level filtering rule.

10. System (GW2) for filtering packets comprising:
- filtering means (MF) for determining, by application of a set of at least one filtering rule, if a packet is authorized to be routed to a destination entity;
- means for generating an authentication token after receipt, by way of a trusted entity, of an initial request not comprising an authentication token,
- means for modifying the initial request by insertion of said authentication token into this initial request,
- means for redirecting the modified initial request so that the modified initial request is reissued without going through said trusted entity,
- means (RP) for verifying the validity of the authentication token included in a second request generated from said modified initial request received by said filtering system,
- means (RP) for adding (211) to said set, when said authentication token is valid, a filtering rule, known as a second-level filtering rule, authorizing the routing of at least one second packet to a destination entity if the source entity for this packet is identical to the source entity for said request and for sending (212) the second request to said filtering means.

11. Packet filtering means (GW2) according to Claim 10, comprising:
- means (RP) for adding to said set, after receipt of an initial request, a filtering rule, known as a first-level filtering rule, authorizing the routing to said means (RP) for verifying at least one packet, received via a predetermined communication port of said device, for which the source address is equal to the source address for the initial request, whatever the source communication port for the subsequent request,
- means (RP) for routing a subsequent request comprising a valid authentication token to a destination entity for this subsequent request.

12. Gateway comprising a filtering system (GW2) according to either one of claims 10 and 11.
